# FASCICULE DE BREVET EUROPEEN

(11) **EP 2 618 496 B1**
(45) Date de publication et mention de la délivrance du brevet: **24.09.2014**
(21) Numéro de dépôt: 12194592.7
(22) Date de dépôt: 28.11.2012
(51) Int. Cl.: H04B 5/00, H01Q 7/00

(54) **Circuit d'antenne pour dispositif NFC**
Antennenschaltkreis für NFC-Vorrichtung
NFC antenna with interleaved coils

(30) Priorité: 18.01.2012 FR 1250502
(43) Date de publication de la demande: 24.07.2013
(73) Titulaire: Inside Secure, 13590 Meyreuil (FR)
(72) Inventeur: Charrat, Bruno, 13090 Aix en Provence (FR)
(74) Mandataire: de Jong, Jean Jacques

(56) Documents cités:
- EP-A1- 2 393 215
- WO-A1-2010/066955
- WO-A1-2011/055702

## Description

### Domaine technique de l'invention

L'invention est relative aux dispositifs de communication en champ proche ou NFC (de l'anglais « Near Field Communication »), et plus particulièrement aux circuits d'antenne utilisés dans de tels dispositifs.

### État de la technique

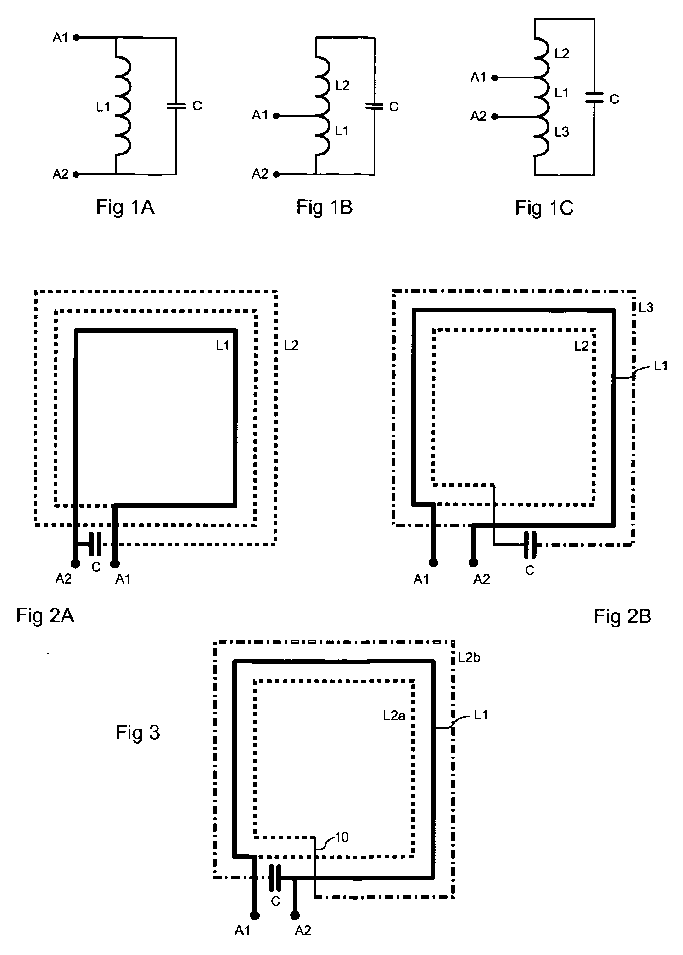

Les figures 1A à 1C représentent différentes structures électriques connues de circuit d'antenne. Ces circuits d'antenne sont utilisables dans des dispositifs NFC actifs susceptibles de créer un champ magnétique et de détecter sa modulation (par exemple un lecteur d'étiquettes RFID), et dans des dispositifs NFC passifs (par exemple une étiquette RFID) alimentés par champ magnétique et configurés pour moduler ce champ pour transmettre des données.

La figure 1A illustre la structure la plus généralement utilisée dans les dispositifs NFC. Elle comprend un bobinage unique L1 connecté en parallèle sur un condensateur d'accord C. Le circuit d'antenne est accordé, par exemple, à 13,56 MHz dans le cadre des normes NFC en vigueur (ex. ISO 14443, ISO 15693). Les bornes du bobinage forment les bornes d'accès A1, A2 du circuit d'antenne.

Les spires des bobinages d'antenne des dispositifs NFC sont généralement réalisées sous forme de pistes métalliques gravées en spirale dans une couche unique d'un circuit imprimé souple. Les bobinages sont plans et coplanaires. Cela permet de minimiser le coût de fabrication, mais entraîne certaines difficultés du fait que les spires sont toutes de dimensions différentes et n'ont donc pas des caractéristiques similaires.

La figure 1B illustre une structure optimisée, décrite par exemple dans la demande de brevet JP2000278172. Le bobinage d'antenne comprend un point milieu formant l'une des bornes d'accès (A1) du circuit d'antenne. On considère que le bobinage d'antenne est formé de deux bobinages connectés en série L1 et L2, les bornes d'accès A1 et A2 étant prises aux bornes du bobinage L1, que l'on qualifiera de « bobinage actif ». Le bobinage L2 sera qualifié comme auxiliaire. Ces bornes A1, A2 sont généralement connectées à un circuit NFC (non représenté) qui peut être un circuit passif (recevant le champ magnétique émis par un autre dispositif NFC) ou actif (émettant le champ magnétique.

Comme indiqué dans le document précité, cette structure permet d'augmenter le nombre de spires du bobinage d'antenne et par conséquent d'augmenter l'énergie reçue ou émise au moyen du bobinage par le circuit NFC connecté aux bornes A1, A2, tout en diminuant le nombre de spires vues par le circuit NFC, de sorte que l'impédance de la bobine vue depuis les bornes A1, A2 soit plus proche de l'impédance de sortie du circuit NFC, ce qui améliore le coefficient de qualité Q du circuit d'antenne.

La figure 1C illustre une structure alternative à celle de la figure 1B. Le bobinage d'antenne comprend deux points milieux formant les bornes d'accès A1 et A2, également connectées à un circuit NFC. On considère que le bobinage d'antenne est formé de trois bobinages connectés en série L1, L2 et L3, les bornes d'accès A1 et A2 étant prises aux bornes du bobinage L1. Le bobinage L1 est le bobinage actif, et les bobinages L2 et L3 sont auxiliaires.

La figure 2A représente schématiquement une configuration spatiale classique du circuit d'antenne de la figure 1B. L'ensemble du bobinage d'antenne est bobiné en spirale, dans un plan unique. Pour simplifier le dessin, on suppose que le bobinage L1 comprend une spire et le bobinage L2 deux spires. Le bobinage d'antenne comprend ainsi trois spires. La spire interne, en trait plein, est celle du bobinage L1 et les deux spires externes, en pointillés, sont celles du bobinage L2.

La figure 2B représente schématiquement une configuration spatiale classique du circuit d'antenne de la figure 1C. Comme précédemment, l'ensemble du bobinage d'antenne est bobiné en spirale, dans un plan unique. Pour simplifier le dessin, on suppose que chaque bobinage L1 à L3 comprend une seule spire. Le bobinage d'antenne comprend ainsi trois spires. La spire interne, en pointillés, est celle du bobinage L2 et la spire externe, en trait mixte, est celle du bobinage L3. La spire médiane, en trait plein, est celle du bobinage actif L1.

Il a été démontré que le circuit de la figure 1B réalisé selon la configuration spatiale en spirale de la figure 2A offre, en termes de distance de communication, des performances inférieures à celles du circuit de la figure 1C réalisé aux mêmes dimensions selon la même configuration spatiale en spirale (figure 2B).

Le document WO 2010/066955 décrit des differents modes de réalisation d'un circuit d'antenne en transpondeur.

### Résumé de l'invention

Il pourrait être souhaité d'améliorer l'efficacité de ces circuits d'antenne.

On tend à satisfaire ce besoin en prévoyant un circuit d'antenne pour communications en champ proche comprenant un bobinage actif plan, connecté entre une première et une seconde borne d'accès; un bobinage auxiliaire coplanaire au bobinage actif et connecté par une première extrémité à la première borne d'accès; et un condensateur d'accord connecté à la seconde extrémité du bobinage auxiliaire. Les spires des bobinages actif et auxiliaire sont entrelacées.

Selon un mode de réalisation, une première partie des spires du bobinage auxiliaire est située à l'intérieur du bobinage actif, et une seconde partie des spires du bobinage auxiliaire est située à l'extérieur du bobinage actif.

Selon un mode de réalisation, une première partie des spires du bobinage actif est située à l'intérieur du bobinage auxiliaire, et une seconde partie des spires du bobinage actif est située à l'extérieur du bobinage auxiliaire.

Selon un mode de réalisation, chaque spire du bobinage actif est encadrée par deux spires du bobinage auxiliaire, adjacentes respectivement par l'intérieur et par l'extérieur.

Selon un mode de réalisation, le circuit d'antenne comprend un deuxième bobinage auxiliaire coplanaire au bobinage actif, connecté entre le condensateur et la seconde borne d'accès, le bobinage actif comprenant un groupe de spires entrelacées avec les spires du premier bobinage auxiliaire, et un groupe de spires distinctes entrelacées avec les spires du deuxième bobinage auxiliaire.

Selon un mode de réalisation, les bobinages auxiliaires sont situés dans deux zones respectives disjointes d'un même plan.

On prévoit également un dispositif passif de communication en champ proche comprenant un circuit d'antenne du type susmentionné et un circuit de modulation de l'impédance entre les bornes d'accès du circuit d'antenne.

On prévoit par ailleurs un dispositif actif de communication en champ proche comprenant un circuit d'antenne du type susmentionné et un circuit d'excitation connecté aux bornes d'accès du circuit d'antenne.

### Description sommaire des dessins

Des modes de réalisation seront exposés dans la description suivante, faite à titre non limitatif en relation avec les figures jointes parmi lesquelles :
- les figures 1A à 1C, précédemment décrites, représentent des structures électriques de circuits d'antenne classiques ;
- la figure 2A, précédemment décrite, représente une configuration spatiale du circuit d'antenne de la figure 1B ;
- la figure 2B, précédemment décrite, représente une configuration spatiale du circuit d'antenne de la figure 1C ;
- la figure 3 représente un exemple de configuration spatiale d'un circuit d'antenne de structure alternative;
- la figure 4 représente un exemple de configuration spatiale pour un bobinage d'antenne ayant un nombre pair de spires;
- la figure 5 représente un exemple de configuration spatiale pour un bobinage d'antenne ayant un nombre impair de spires;
- les figures 6A à 6C symbolisent plusieurs possibilités d'entrelacement de spires ; et
- la figure 7 représente un exemple de configuration spatiale entrelacée applicable à une antenne du type de la figure 1C.

### Description d'un mode de réalisation préféré de l'invention

Comme précédemment indiqué, il a été démontré par l'usage que la configuration spatiale de circuit d'antenne de la figure 2B, qui met en oeuvre le circuit électrique de la figure 1C, est plus efficace, en termes de distance de communication à dimensions d'antenne égales, que celle de la figure 2A, qui met en oeuvre le circuit d'antenne de la figure 1B.

Les structures des antennes des figures 1B et 1C étant équivalentes du point de vue purement électrique, on suppose que la différence d'efficacité est liée à la différence des configurations spatiales classiquement utilisées pour réaliser ces types d'antenne. On étudie ici des configurations spatiales susceptibles d'améliorer l'efficacité.

La figure 3 illustre une modification de la structure électrique de l'antenne de la figure 2A qui préserve la configuration spatiale de la figure 2B. Le condensateur C de la figure 2B est remplacé par un conducteur électrique 10, et un condensateur C est inséré dans la connexion de la spire L3 à la borne A2.

Il s'avère que la structure électrique ainsi obtenue est celle de la figure 1B, avec un bobinage auxiliaire L2 comprenant plus de spires que le bobinage actif L1. En outre, une partie L2a des spires du bobinage L2 (une spire dans la figure 3) se trouve à l'intérieur du bobinage L1, et la partie restante L2b des spires du bobinage L2 (une spire dans la figure 3) se trouve à l'extérieur du bobinage L1.

En d'autres termes, les spires des bobinages L1 et L2 sont entrelacées, plutôt que d'être bobinées en une spirale régulière.

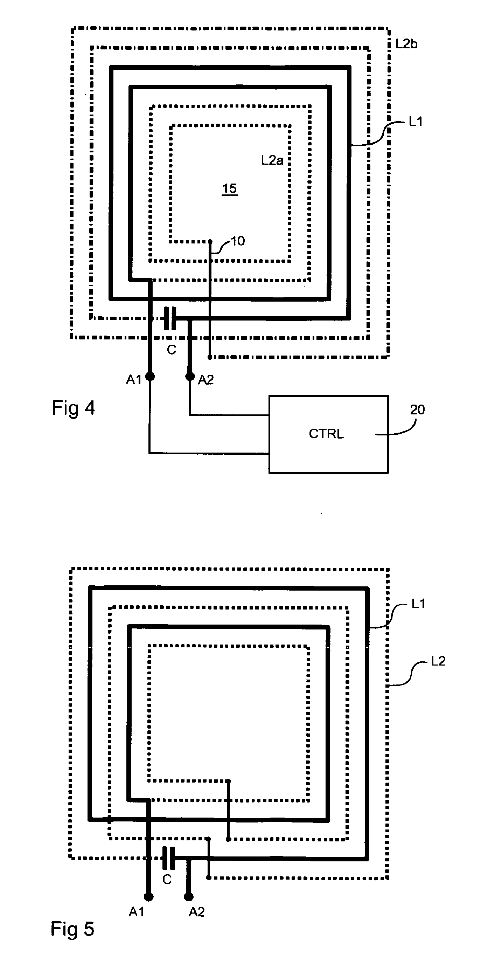

La figure 4 représente une configuration spatiale basée sur le même principe que celui de la figure 3, avec un bobinage L1 à deux spires, et un bobinage L2 à quatre spires. Le bobinage L2 est séparé en deux parties L2a et L2b, la partie L2a comprenant deux spires adjacentes à l'intérieur du bobinage actif L1, et la partie L2b comprenant deux spires adjacentes à l'extérieur du bobinage L1. Le demi-bobinage L2a et le bobinage L1 sont bobinés l'un après l'autre en spirale régulière dans le sens horaire de l'intérieur vers l'extérieur. A l'intérieur on trouve l'extrémité du bobinage L2a qui est connectée par le conducteur 10 à une extrémité du bobinage L2b. A partir de cette extrémité, le bobinage L2b est bobiné dans le sens antihoraire de l'extérieur vers l'intérieur. Le bobinage L2b se termine par le condensateur C connecté à la borne A2.

Par ce choix des sens de bobinage, le courant série dans le bobinage d'antenne circule dans le même sens dans toutes les spires. Selon une variante de la configuration de la figure 4 préservant le sens du courant, le demi-bobinage L2b pourrait être bobiné dans le sens horaire de l'intérieur vers l'extérieur, depuis l'extrémité connectée au conducteur 10.

En pratique, de préférence, toutes les spires sont réalisées dans une même couche d'un substrat 15, tel qu'un circuit imprimé souple, et le conducteur 10, qui croise radialement les spires, est réalisé dans une couche différente du substrat et relié aux extrémités correspondantes des spires par des vias. Il en va de même pour des conducteurs servant à ramener les bornes d'accès A1 et A2 vers la périphérie de la structure, et pour les connexions du condensateur C.

Les bornes A1 et A2 sont connectées à un circuit 20 de gestion du dispositif NFC qui intègre le circuit d'antenne. Il peut s'agir d'un dispositif passif, comme une étiquette RFID, auquel cas le circuit 20 est conçu pour tirer son alimentation du champ magnétique capté par l'antenne et pour moduler l'impédance entre les bornes A1 et A2 pour transmettre des informations. Dans le cas où le dispositif NFC est actif, le circuit 20 est conçu pour exciter l'antenne par les bornes A1 et A2 de sorte à créer un champ magnétique, et à détecter des modulations de ce champ provoquées par d'autres dispositifs NFC à la portée du champ.

On a conduit des essais sur deux antennes de mêmes caractéristiques en termes de dimensions et de nombre total de spires, l'une réalisée selon la configuration spatiale de la figure 4, et l'autre selon la configuration spatiale de la figure 2B (avec trois bobinages à deux spires). Ces deux antennes se sont avérées équivalentes, à dimensions égales, en termes de distance de communication avec différents types classiques d'étiquettes RFID.

On parvient donc à améliorer l'efficacité d'une antenne du type de la figure 1B en modifiant sa structure spatiale de manière que les spires des bobinages L1 et L2 soient entrelacées.

Une antenne du type de la figure 1B, 3 ou 4, est plus facile à réaliser et à mettre en oeuvre qu'une antenne du type de la figure 1C. En effet, elle présente trois points de connexion aux bobinages au lieu de quatre, en comptant les deux connexions aux bornes d'accès A1, A2 et la connexion du bobinage auxiliaire L2 à une première borne du condensateur. La deuxième borne du condensateur et la borne A2 sont reliées à la masse au lieu d'être flottantes.

Les bobinages d'antenne décrits jusqu'à maintenant ont un rapport 1:3 (entre le nombre de spires du bobinage actif L1 et le nombre total de spires du bobinage d'antenne). Il est souhaitable de pouvoir réaliser d'autres rapports. Dans la structure de la figure 4, on peut pour cela faire varier le nombre de spires des demi-bobinages L2a et L2b indépendamment du nombre de spires du bobinage L1, ou inversement, sans affecter la configuration générique du circuit d'antenne.

La figure 5 illustre une variante de configuration adaptée à un nombre total de spires impair, notamment pour le cas où le bobinage L1 comporte une spire de moins que le bobinage L2. L'exemple représenté correspond à un bobinage L1 de deux spires et un bobinage L2 de trois spires. Dans ce cas, plutôt que de séparer le bobinage L2 en deux parties inégales (ce qui reste quand même envisageable dans la structure de la figure 4), on alterne spatialement chaque spire du bobinage L1 avec une spire du bobinage L2. Chaque spire du bobinage L1 se trouve ainsi encadrée par deux spires du bobinage L2, adjacentes respectivement par l'intérieur et par l'extérieur.

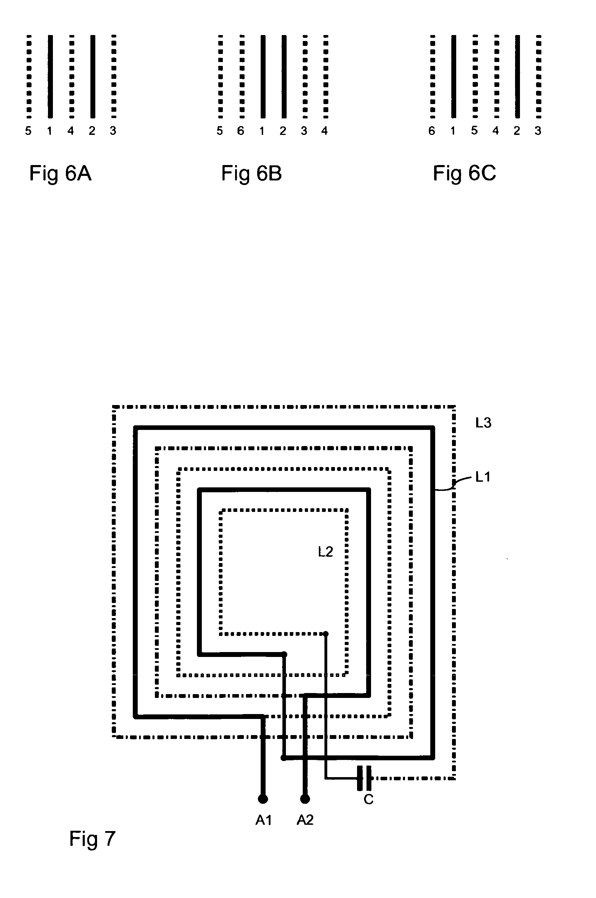

Les figures 6A à 6C résument différentes possibilités élémentaires d'entrelacement de spires offertes selon les nombres de spires des bobinages L1 et L2. Les traits verticaux représentent l'agencement spatial des spires. De gauche à droite on représente les spires de l'extérieur vers le centre du bobinage d'antenne. Les traits pleins correspondent aux spires du bobinage actif L1, et les traits en pointillés correspondent aux spires du bobinage auxiliaire L2. Les numéros sous les traits désignent l'ordre de bobinage.

La figure 6A correspond au cas de la figure 5, c'est-à-dire un nombre total impair de spires. On bobine consécutivement les deux spires du bobinage L1 en positions spatiales 2 et 4, et on continue par le bobinage des trois spires du bobinage L2 en positions spatiales 5, 3 et 1.

La figure 6B correspond au cas de la figure 4, c'est-à-dire un nombre total pair de spires. On bobine consécutivement les deux spires du bobinage L1 en positions spatiales 3 et 4, et on continue par le bobinage des quatre spires du bobinage L2 en positions spatiales 5, 6, 1 et 2.

La figure 6C est une variante de la figure 6B. Les deux spires du bobinage L1 sont séparées spatialement par deux spires du bobinage L2. Plus spécifiquement, on bobine les spires du bobinage L1 en positions spatiales 2 et 5, puis on bobine les spires du bobinage L2 en positions spatiales 6, 4, 3 et 1.

Les configurations spatiales entrelacées illustrées par les figures 6A à 6C tendent à réduire la distance radiale moyenne entre les spires du bobinage auxiliaire L2 et les spires du bobinage actif L1, ce qui a pour conséquence une amélioration du coefficient de couplage entre les bobinages actif et auxiliaire. Pour cette même raison, les variantes des figures 6A et 6C offrent une meilleure efficacité que celle de la figure 6B, car les spires du bobinage actif L1 se trouvent mieux réparties parmi les spires du bobinage auxiliaire L2.

Les ordres de bobinage indiqués aux figures 6A à 6C sont donnés à titre d'exemple. Ce qui importe est la position spatiale des spires, de sorte que les spires des bobinages L1 et L2 soient entrelacées. L'ordre de bobinage sera choisi, de préférence, pour diminuer le nombre de croisements de spires, qui nécessitent des conducteurs dans une deuxième couche de substrat et des vias.

Selon les rapports à obtenir et les nombres de spires des bobinages, on pourra dupliquer les motifs des figures 6A à 6C ou bien les combiner au sein d'un même bobinage d'antenne. Chaque trait peut en outre représenter de multiples spires d'un même bobinage et le nombre de spires par trait peut être différent pour les deux bobinages.

La figure 7 représente un exemple d'application de l'entrelacement à un bobinage d'antenne du type de la figure 1C, comprenant trois bobinages L1, L2 et L3 de deux spires chacune. Le bobinage L1 est le bobinage actif, et les bobinages L2 et L3 sont auxiliaires. Cette structure est similaire à celle de la figure 6C, dont les deux moitiés correspondent respectivement aux bobinages auxiliaires L2 et L3. Les spires sont bobinées dans le sens horaire en partant de l'intérieur. On trouve successivement, en partant de l'intérieur vers l'extérieur, une première spire du bobinage L2, une première spire du bobinage L1, la deuxième spire du bobinage L2, une première spire du bobinage L3, la deuxième spire du bobinage L1, puis la deuxième spire du bobinage L3.

Les extrémités libres de la première spire du bobinage L2 (au centre) et de la deuxième spire du bobinage L3 (à l'extérieur) sont reliées par le condensateur C. Les deux spires du bobinage L1 sont reliées par un conducteur radial en deuxième couche. Les deux extrémités du bobinage L1 sont reliées aux bornes d'accès A1 et A2.

Ainsi, un premier groupe de spires du bobinage L1 est entrelacé avec les spires du bobinage L2, et un deuxième groupe formé des spires restantes du bobinage L1 est entrelacé avec les spires du bobinage L3. Cette configuration spatiale améliore l'efficacité de l'antenne par rapport à la configuration spatiale classique de la figure 2B. Les bobinages auxiliaires ne comportent par contre pas de spires entrelacées - ils sont situés dans des zones disjointes du plan du bobinage d'antenne.

On s'aperçoit que chacun des bobinages L2 et L3, associé au groupe de spires du bobinage L1 qui lui est affecté, joue le même rôle que le seul bobinage L2 associé à l'ensemble du bobinage L1 des configurations à deux bobinages. Ainsi, on peut appliquer des combinaisons des configurations des figures 6A à 6C à chacun des bobinages L2 et L3, et la moitié associée du bobinage L1.

De nombreuses variantes et modifications des modes de réalisation décrits ici apparaîtront à l'homme du métier. On a par exemple décrit un condensateur d'accord connecté aux bornes de l'ensemble du bobinage d'antenne. Le condensateur pourrait également être connecté aux bornes du bobinage auxiliaire. Par ailleurs, dans les divers exemples décrits, le bobinage auxiliaire a plus de spires que le bobinage actif, ce qui correspond aux cas d'utilisation les plus courants. Il est néanmoins envisageable que le bobinage actif ait plus de spires que le bobinage auxiliaire, auquel cas les rôles spatiaux de ces deux bobinages sont intervertis dans les exemples décrits.

## Revendications

1. Circuit d'antenne pour communications en champ proche comprenant :
• un bobinage actif (L1) plan, connecté entre une première (A1) et une seconde (A2) borne d'accès;
• un bobinage auxiliaire (L2) coplanaire au bobinage actif et connecté par une première extrémité à la première borne d'accès (A1); et
• un condensateur d'accord (C) connecté à la seconde extrémité du bobinage auxiliaire (L2) ;
**caractérisé en ce que** les spires des bobinages actif et auxiliaire sont entrelacées.

2. Circuit d'antenne selon la revendication 1, dans lequel une première partie (L2a) des spires du bobinage auxiliaire (L2) est située à l'intérieur du bobinage actif (L1), et une seconde partie (L2b) des spires du bobinage auxiliaire (L2) est située à l'extérieur du bobinage actif.

3. Circuit d'antenne selon la revendication 1, dans lequel une première partie des spires du bobinage actif (L1) est située à l'intérieur du bobinage auxiliaire (L2), et une seconde partie des spires du bobinage actif (L1) est située à l'extérieur du bobinage auxiliaire.

4. Circuit d'antenne selon la revendication 1, dans lequel chaque spire du bobinage actif (L1) est encadrée par deux spires du bobinage auxiliaire (L2), adjacentes respectivement par l'intérieur et par l'extérieur.

5. Circuit d'antenne selon la revendication 1, comprenant un deuxième bobinage auxiliaire (L3) coplanaire au bobinage actif (L1), connecté entre le condensateur (C) et la seconde borne d'accès (A2), le bobinage actif comprenant un groupe de spires entrelacées avec les spires du premier bobinage auxiliaire, et un groupe de spires distinctes entrelacées avec les spires du deuxième bobinage auxiliaire.

6. Circuit d'antenne selon la revendication 5, dans lequel les bobinages auxiliaires sont situés dans deux zones respectives disjointes d'un même plan.

7. Dispositif passif de communication en champ proche comprenant un circuit d'antenne selon la revendication 1 et un circuit (20) de modulation de l'impédance entre les bornes d'accès (A1, A2) du circuit d'antenne.

8. Dispositif actif de communication en champ proche comprenant un circuit d'antenne selon la revendication 1 et un circuit d'excitation (20) connecté aux bornes d'accès (Al , A2) du circuit d'antenne.

## Patentansprüche

1. Antennenkreis für Nahfeldkommunikationen umfassend:
• eine planare aktive Wicklung (L1), die zwischen einer ersten (A1) und einer zweiten (A2) Zugangsklemme angeschlossen ist;
• eine Hilfswicklung (L2), die komplanar zur aktiven Wicklung ist, und die über ein erstes Ende an der ersten Zugangsklemme (A1) angeschlossen ist; und
• einen Abgleichkondensator (C), der an dem zweiten Ende der Hilfswicklung (L2) angeschlossen ist;
**dadurch gekennzeichnet, dass** die Windungen der aktiven Wicklung und der Hilfswicklung miteinander verflochten sind.

2. Antennenkreis nach Anspruch 1, bei dem sich ein erster Teil (L2a) der Windungen der Hilfswicklung (L2) innerhalb der aktiven Wicklung (L1) befindet, und sich ein zweiter Teil (L2b) der Windungen der Hilfswicklung (L2) außerhalb der aktiven Wicklung befindet.

3. Antennenkreis nach Anspruch 1, bei dem sich ein erster Teil der Windungen der aktiven Wicklung (L1) innerhalb der Hilfswicklung (L2) befindet, und sich ein zweiter Teil der Windungen der aktiven Wicklung (L1) außerhalb der Hilfswicklung befindet.

4. Antennenkreis nach Anspruch 1, bei dem jede Windung der aktiven Wicklung (L1) durch zwei Windungen der Hilfswicklung (L2) eingerahmt ist, die jeweils von Innen und von Außen angrenzend sind.

5. Antennenkreis nach Anspruch 1, umfassend eine zweite Hilfswicklung (L3), die komplanar zur aktiven Wicklung (L1) ist, und die zwischen dem Kondensator (C) und der zweiten Zugangsklemme (A2) angeschlossen ist, wobei die aktive Wicklung eine Gruppe von Windungen umfasst, die mit den Windungen der ersten Hilfswicklung verflochten sind, und eine Gruppe von getrennten Windungen, die mit den Windungen der zweiten Hilfswicklung verflochten sind.

6. Antennenkreis nach Anspruch 5, bei dem sich die Hilfswicklungen in zwei voneinander getrennten Zonen derselben Ebene befinden.

7. Passive Nahfeldkommunikationsvorrichtung umfassend einen Antennenkreis nach Anspruch 1 und einen Kreis (20) zur Modulation der Impedanz zwischen den Zugangsklemmen (A1, A2) des Antennenkreises.

8. Aktive Nahfeldkommunikationsvorrichtung umfassend einen Antennenkreis nach Anspruch 1 und einen Erregerkreis (20), der an den Zugangsklemmen (A1, A2) des Antennenkreises angeschlossen ist.

## Claims

1. Antenna circuit for near-field communications comprising:
• a planar active winding (L1), connected between a first (A1) and a second (A2) access terminal;
• an auxiliary winding (L2) coplanar with the active winding and connected by a first end to the first access terminal (A1); and
• a tuning capacitor (C) connected to the second end of the auxiliary winding (L2);
**characterized in that** the turns of the active and auxiliary windings are interleaved.

2. Antenna circuit according to Claim 1, in which a first part (L2a) of the turns of the auxiliary winding (L2) is situated inside the active winding (L1), and a second part (L2b) of the turns of the auxiliary winding (L2) is situated outside the active winding.

3. Antenna circuit according to Claim 1, in which a first part of the turns of the active winding (L1) is situated inside the auxiliary winding (L2), and a second part of the turns of the active winding (L1) is situated outside the auxiliary winding.

4. Antenna circuit according to Claim 1, in which each turn of the active winding (L1) is flanked by two turns of the auxiliary winding (L2), adjacent respectively on the inside and on the outside.

5. Antenna circuit according to Claim 1, comprising a second auxiliary winding (L3) coplanar with the active winding (L1), connected between the capacitor (C) and the second access terminal (A2), the active winding comprising a group of turns interleaved with the turns of the first auxiliary winding, and a group of distinct turns interleaved with the turns of the second auxiliary winding.

6. Antenna circuit according to Claim 5, in which the auxiliary windings are situated in two disjoint respective zones of one and the same plane.

7. Passive near-field communication device comprising an antenna circuit according to Claim 1 and a circuit (20) for modulating the impedance between the access terminals (A1, A2) of the antenna circuit.

8. Active near-field communication device comprising an antenna circuit according to Claim 1 and an excitation circuit (20) connected to the access terminals (A1, A2) of the antenna circuit.
